# EUROPÄISCHE PATENTSCHRIFT

(11) **EP 0 692 332 B1**
(45) Veröffentlichungstag und Bekanntmachung des Hinweises auf die Patenterteilung: **10.11.1999**
(21) Anmeldenummer: 95110259.9
(22) Anmeldetag: 01.07.1995
(51) Int. Cl.: B23B 51/00

(54) **Volkeramikbohrer**
Ceramic drill
Foret en céramique

(30) Priorität: 14.07.1994 DE 4424885
(43) Veröffentlichungstag der Anmeldung: 17.01.1996
(73) Patentinhaber: CERASIV GmbH INNOVATIVES KERAMIK-ENGINEERING, D-73207 Plochingen (DE)
(72) Erfinder: Leins, August, D-73278 Schlierbach (DE); Müller, Rolf, D-72070 Tübingen (DE)
(74) Vertreter: Scherzberg, Andreas, Dr.

(56) Entgegenhaltungen:
- DE-A- 3 930 936
- WERKSTATT UND BETRIEB, Bd. 124, Nr. 1, 1991 Seite 55 XP 000175453 'Vollkeramik-spiralbohrer für ein breites Anwendungsgebiet'
- WILSON F.W., HARVEY P.D. 'tool engineers hanbook' 1959 , MCGRAW-HILL , NEW-YORK 2nd edition * Seite 28-13, Zeile 42 - Zeile 43; Abbildungen 28-11 *

## Beschreibung

Die Erfindung betrifft einen Vollkeramikbohrer nach dem Oberbegriff des Anspruchs 1.

Beim Bohren mit HSS(Schnellarbeitsstahl)- und HM(Hartmetall)-Werkzeugen ist eine Leistungsteigerung bei der Zerspanung nur noch begrenzt möglich. Bei einer weiteren Erhöhung der Schnittgeschwindigkeit tritt in der Regel versagen durch Überschreiten der Warmhärte auf. Folgen sind hohe Fertigungszeitanteile für die entsprechenden Operationen und damit ein hoher Kostenanteil bei der Werkstückfertigung. Zudem erfordert der Einsatz dieser Werkzeuge eine stetige Zufuhr von Kühlschmiermitteln, deren Entsorgung heute zunehmend Probleme bereitet.

Eine wesentliche Leistungssteigerung ist durch die Anderung des Werkzeugwerkstoffes möglich. Hierbei kommen aufgrund ihrer Werkstoffkennwerte und der positiven Entwicklung im Dreh- und Fräsbereich Keramikwerkstoffe in Betracht. Diese zeichnen sich durch sehr hohe Warmhärte und Verschleißfestigkeit aus und versprechen damit wesentliche Vorteile bei der Steigerung der Schnittgeschwindigkeitswerte. Neben der Verringerung der Bearbeitungszeiten sind beim Einsatz keramischer Bohrwerkzeuge als weitere Vorteile eine sehr hohe Oberflächengüte, geringe Verschleißwerte sowie ökonomische und ökologische Vorteile durch die Trockenbearbeitung anzuführen.

Bei der geometrischen Gestaltung der Werkzeuge ist aber den Besonderheiten des Werkstoffes Rechnung zu tragen. Die gegenüber HSS und HM wesentlich geringere Zähigkeit der Keramik erfordert einen möglichst großen Werkstoffquerschnitt. Die hohen Schnittwerte und das damit große Zerspanvolumen bedingt eine besondere Gestaltung der Spannuten mit möglichst großem Querschnitt. Der Querschneidenanschliff ist dermaßen zu gestalten, daß Werkstoffquetschung durch gegen Null gehende Schnittgeschwindigkeiten im Bohrerzentrum weitgehend vermieden wird (Auftreten von Zugspannungen im Schneidstoff).

Bekannt sind vollkeramische Bohrwerkzeuge bzw. Bohrer mit HSS-Geometrien (Firmenschrift Bohrmeister-Gühring, Mit Keramik in die Vollen, 25. Jahrgang, Ausgabe 37/92, Seiten 14 bis 17). Dieses Dokument beschreibt den nächsten Stand der Technik. Hierbei ist der Anschliff jedoch den besonderen keramischen Stoffeigenschaften nicht angepaßt. Die Werkzeuge versagen insbesondere durch Bruch und Ausbruch infolge einer nicht schneidstoffgerechten Geometrie.

Der Erfindung liegt die Aufgabe zugrunde, einen Vollkeramikbohrer nach dem Oberbegriff des Anspruchs 1 derart zu verbessern, daß die positiven Eigenschaften der Keramik mit einer entsprechend den Besonderheiten des Werkstoffes angepaßten Werkzeuggeometrie verbunden sind.

Erfindungsgemäß wird diese Aufgabe durch die kennzeichnenden Merkmale des Anspruchs 1 unter an deren dadurch gelöst, daß die Spannut in Axialrichtung geradlinig entlang einer Mantellinie geführt ist, d.h. nicht verdrillt ist, und mit einer sich in Axialrichtung des Bohrers erstreckenden Führungsfase versehen ist, die sich nach hinten verjüngt. Mit "hinten" ist das der Bohrerspitze entgegengesetzte Ende des Bohrers gemeint. Anders ausgedrückt heißt das, daß der Drallwinkel Null ist. Hierdurch ist die Werkzeuggeometrie optimal auf den Werkstoff Keramik eingestellt. Außerdem ist eine gute Spanabfuhr bei den mit diesen Bohrern erreichbaren Schnittgeschwindigkeiten gewährleistet.

Die hier verwendeten Begriffe wie Spannut, Fase etc. sind in dem Buch Studium und Praxis; Wilfried König; Fertigungsverfahren Band 1 Drehen, Fräsen, Bohren; 2. Auflage, 1984, VDI-Verlag GmbH Düsseldorf, Seiten 290 bis 303 beschrieben.

Vorteilhafterweise verjüngt sich die Führungsfase um 0,5 - 1° nach hinten. Die Breite der Führungsfase beträgt bevorzugt maximal 0,5 mm. Durch die Ausgestaltung des Führungsfasenbereichs sind die Reibkräfte vermindert. Ebenso ist die Torsionsbelastung herabgesetzt.

Der Spitzenwinkel beträgt vorteilhafterweise mindestens 140°, wodurch die Spanabfuhr auch bei zähen bzw. weichen Werkstoffen gewährleistet ist.

In bevorzugter Weiterbildung der Erfindung weist der Vollkeramikbohrer zumindest in Teilbereichen eine Beschichtung auf. Diese Beschichtung besteht bevorzugt aus ein- oder mehrlagigen Schichten der Stoffe Titannitrid und/oder Aluminiumoxid und/oder Titancarbonitrid oder hochharten Beschichtungen wie Diamant, CBN (kubisches Bornitrid) oder B₄ C (Bor-4-Carbid). Außerdem sei noch erwähnt, daß die Kerndicke mindestens 0,30 x Bohrerdurchmesser betragen soll. Hierdurch wird eine ausreichende Werkzeugstabilität auch bei kleinen Bohrerdurchmessern erreicht. Die Querschneide wird vorteilhafterweise mit einem Kreuzschliff versehen, wodurch ein Verquetschen des Werkstoffes weitgehend vermieden ist und die spezifische Schneidkantenbelastung gering bleibt.

Am Übergang von der Hauptschneide zur Führungsfase ist zur Vermeidung von Graten beim Werkzeugaustritt eine Facette angebracht. Die Schneidkanten sind zweckmäßigerweise mit einer Schutzfase oder Verrundung versehen.

Die erfindungsgemäße Geometrie ermöglicht insbesondere
- Bohren, Bohrsenken, Bohren und anschließend Rückwärtssenken, Stufenbohren
- Einsatz unter hohen Schnittgeschwindigkeiten und Vorschüben
- eine sehr gute Spanabfuhr
- sehr hohe Oberflächengüte an der Bohrungswandung
- einen gratfreien Austritt am Werkstück
- Trockenbearbeitung.

Weitere Merkmale der Erfindung ergeben sich aus den Figuren, die nachfolgend eingehend beschrieben werden. Es zeigt:
- Fig.1: eine Ansicht eines erfindungsgemäßen Vollkeramikbohrers,
- Fig.2: eine Draufsicht auf die Spitze des Bohrers gemäß Fig.1 in Axialrichtung,
- Fig.3: eine weitere Ansicht des Bohrers gemäß Fig.1 und
- Fig.4: eine vergrößerte Darstellung eines Teils der Bohrerspitze aus Fig.3.

Der Vollkeramikbohrer ist aus folgender Keramik hergestellt: Siliziumnitridkeramik oder Aluminiumoxidkeramik oder Mischkeramik.

Die Spitze des Bohrers weist wie üblich zwei Hauptschneiden 3a, 3b mit einer die beiden Hauptschneiden 3a, 3b verbindenden Querschneide 4 auf. Der Spitzenwinkel, d.h. der Winkel der beiden Hauptschneiden 3a, 3b zueinander, beträgt 140^{o}. Er sollte nicht kleiner als 140^{o} sein. Die Spannuten 1 sind unverdrillt, d.h. der Drallwinkel ist Null, und sie sind in Axialrichtung geradlinig entlang einer Mantellinie geführt. Aufgrund dieses erfindungswesentlichen Merkmals sind die Hauptschneiden 3a, 3b geradlinig geformt und nicht gebogen, wie dies bei verdrillten Bohrern nach dem Stand der Technik üblich ist. In Bezug auf die Spannuten 1 ist der Bohrer spiegelsymmetrisch aufgebaut.

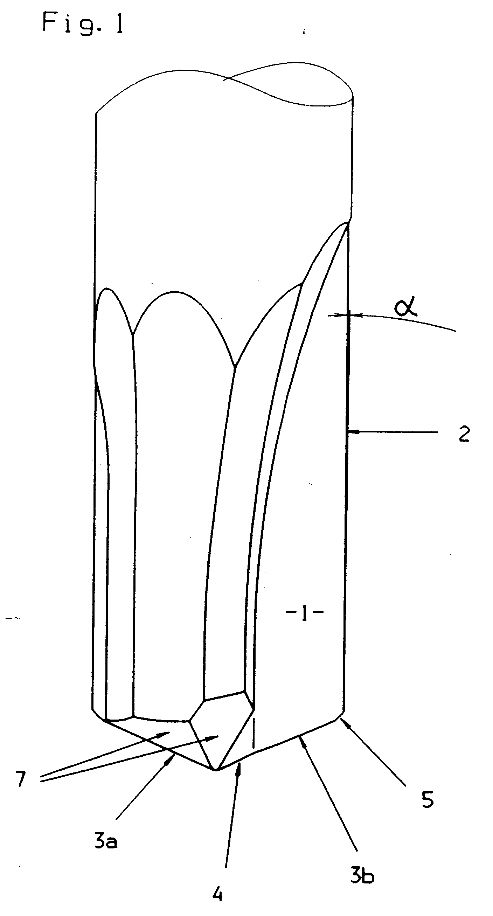

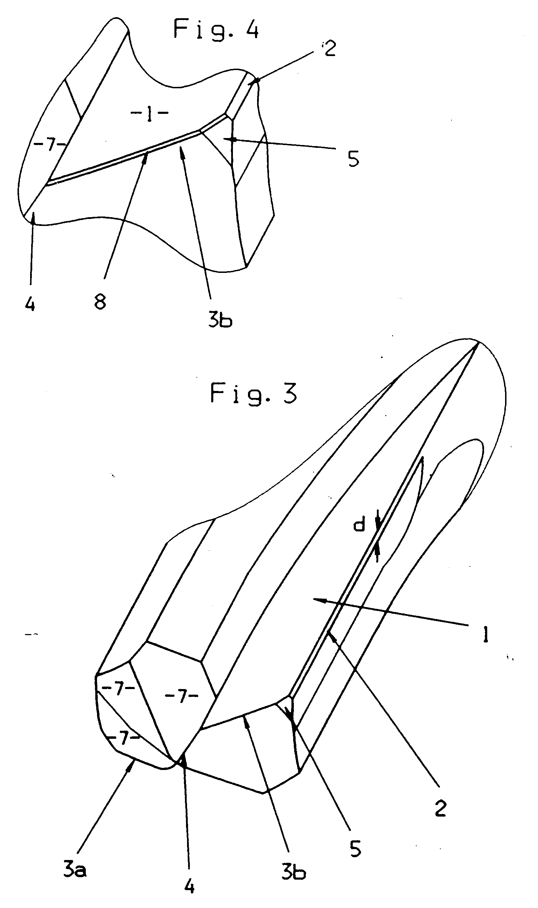

Die Spannut 1 ist mit einer sich in Axialrichtung des Bohrers erstreckenden Führungsfase 2 versehen, die sich nach hinten verjüngt um einen Winkel α der zwischen 0,5 und 1^{o} liegt. In Fig.1 ist der Winkel α eingezeichnet. Die Breite d der Führungsfase 2 beträgt maximal 0,5 mm. Fig.3 zeigt die Breite d der Führungsfase 2. Am Übergang von der Hauptschneide 3a, 3b zur Führungsfase 2 ist zur Vermeidung von Graten beim Werkzeugaustritt jeweils eine Facette 5 angeordnet.

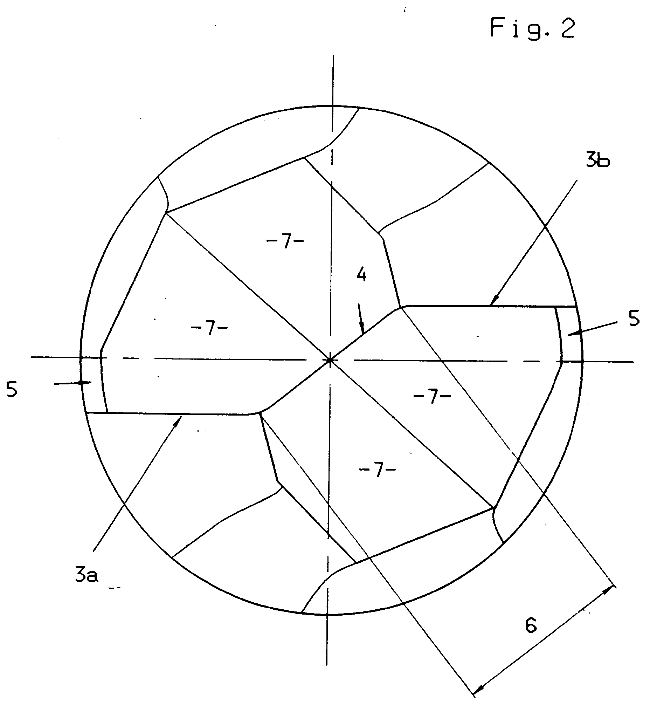

Die Kerndicke 6 (siehe Fig.2) beträgt mindestens 0,30 x Bohrerdurchmesser, wodurch die Werkzeugstabilität verbessert ist. An der Querschneide 4 ist ein Kreuzschliff 7 angeordnet, wodurch die spezifische Schneidkantenbelastung gering bleibt. Zum Schutz der Schneidkanten sind diese mit einer Schutzfase oder Verrundung 8 versehen (siehe Fig.4). Die Schutzfase besitzt eine Breite von bevorzugt 0,03 - 0,1 mm bei einem Winkel von 5^{o} - 20^{o}. Im Falle einer Verrundung besitzt diese einen Radius von 0,02 bis 0,1 mm.

## Patentansprüche

1. Vollkeramikbohrer mit einer Spannut (1), **dadurch gekennzeichnet**, daß die Spannut (1) in Axialrichtung geradlinig entlang einer Mantellinie geführt ist und daß die Spannut (1) mit einer sich in Axialrichtung des Bohrers erstreckenden Führungsfase (2) versehen ist, die sich nach hinten verjüngt.

2. Vollkeramikbohrer nach Anspruch 1, **dadurch gekennzeichnet**, daß sich die Führungsfase (2) um einen Winkel α = 0,5 bis 1° nach hinten verjüngt.

3. Vollkeramikbohrer nach Anspruch 1 oder 2, **dadurch gekennzeichnet**, daß die Breite (d) der Führungsfase (2) maximal 0,5 mm beträgt.

4. Vollkeramikbohrer nach einem der Ansprüche 1 bis 3, **dadurch gekennzeichnet**, daß der Spitzenwinkel der beiden Hauptschneiden (3a, 3b) mindestens 140° beträgt.

5. Vollkeramikbohrer nach einem der Ansprüche 1 bis 4, **dadurch gekennzeichnet**, daß der Vollkeramikbohrer zumindest in Teilbereichen eine Beschichtung aufweist.

6. Vollkeramikbohrer nach Anspruch 5, **dadurch gekennzeichnet**, daß die Beschichtung aus ein- oder mehrlagigen Schichten der Stoffe Titannitrid und/oder Aluminiumoxid und/oder Titancarbonitrid oder hochharten Beschichtungen wie Diamant, CBN (kubisches Bornitrid) oder B4 C (Bor-4-Carbid) besteht.

## Claims

1. Solid ceramic drill bit having a flute (1), characterised in that the flute (1) is led in the axial direction in a straight line along a surface line, and in that the flute (1) is provided with a guide chamfer (2) which extends in the axial direction of the drill bitand tapers towards the rear.

2. Solid ceramic drill bit according to claim 1, characterised in that the guide chamfer (2) tapers towards the rear at an angle α = 0.5 to 1°.

3. Solid ceramic drill bit according to claim 1 or 2, characterised in that the width (d) of the guide chamfer (2) amounts to a maximum of 0.5 mm.

4. Solid ceramic drill bit according to one of claims 1 to 3, characterised in that the point angle of the two main cutting edges (3a, 3b) amounts to at least 140°.

5. Solid ceramic drill bit according to one of claims 1 to 4, characterised in that the solid ceramic drill bithas a coating at least in partial areas.

6. Solid ceramic drill bit according to claim 5, characterised in that the coating consists of single-layer or multilayer coats of the substances titanium nitride and/or aluminium oxide and/or titanium carbonitride or very hard coatings such as diamond, CBN (cubic boron nitride) or B4 C (boron-4-carbide).

## Revendications

1. Foret en céramique comportant une rainure à copeau (1), caractérisé par le fait que la rainure à copeau (1), dans la direction axiale, s'étend de manière rectiligne le long d'une génératrice et par le fait que la rainure à copeau (1) est pourvue d'un chanfrein de guidage (2) qui s'étend dans la direction axiale du foret et se rétrécit vers l'arrière.

2. Foret en céramique selon la revendication 1, caractérisé par le fait que le chanfrein de guidage (2) se rétrécit vers l'arrière suivant un angle α = 0,5 à 1°.

3. Foret en céramique selon la revendication 1 ou 2, caractérisé par le fait que la largeur (d) du chanfrein de guidage (2) est de 0,5 mm maximum.

4. Foret en céramique selon une des revendications 1 à 3, caractérisé par le fait que l'angle au sommet des deux arêtes de coupe principales (3a, 3b) est d'au moins 140°.

5. Foret en céramique selon une des revendications 1 à 4, caractérisé par le fait que le foret en céramique comporte au moins localement un revêtement.

6. Foret en céramique selon la revendication 5, caractérisé par le fait que le revêtement est formé de couches simples ou multiples des matériaux nitrure de titane et/ou oxyde d'aluminium et/ou carbonitrure de titane ou de revêtements à dureté très élevée tels que le diamant, CBN (nitrure de bore cubique) ou B₄ C (carbure de tétrabore).
